# EUROPÄISCHE PATENTSCHRIFT

(11) **EP 0 873 951 B1**
(45) Veröffentlichungstag und Bekanntmachung des Hinweises auf die Patenterteilung: **05.02.2003**
(21) Anmeldenummer: 98102416.9
(22) Anmeldetag: 12.02.1998
(51) Int. Cl.: B65G 47/71

(54) **Vorrichtung zum Auseinanderführen eines einreihig ankommenden Gefässstromes**
Apparatus for dividing the flow of a one-line stream of containers
Dispositif pour diviser un courant de récipients qui arrivent en une seule ligne

(30) Priorität: 05.02.1998 DE 19804538; 22.04.1997 DE 19716842
(43) Veröffentlichungstag der Anmeldung: 28.10.1998
(73) Patentinhaber: KHS Maschinen- und Anlagenbau Aktiengesellschaft, 44143 Dortmund (DE)
(72) Erfinder: Paroth, Berthold, 44289 Dortmund (DE); Scholz, Uli, 59348 Lüdinghausen (DE); Strohn, Gisbert, 58313 Herdecke (DE); Mundt, Georg, 59174 Kamen (DE)

(56) Entgegenhaltungen:
- DE-B- 1 080 483
- DE-U- 1 868 678
- DE-U- 29 707 219
- FR-A- 1 256 178
- FR-A- 2 346 254
- US-A- 5 385 226

## Beschreibung

Die Erfindung bezieht sich auf eine Vorrichtung zum Auseinanderführen eines einreihig ankommenden Gefäßstromes in einen mehrspurigen Gefäßstrom, bestehend aus einem Zuförderer, einer Überleitstrecke und einem Abförderer, wobei die Förderer als Band- und/oder Plattenbandförderer ausgebildet sind.

Vorwiegend in der Getränkeindustrie stellt sich das Problem, von einer Behandlungsmaschine entlassene Gefäße in einem einspurigen Strom zur Pufferung zwischen einer nachfolgenden Maschine in mehrere Spuren aufzuteilen. Hierzu sind eine Vielzahl von Auseinanderführungen bekannt geworden. So zeigt beispielsweise die DE 3505253 C2 eine Flaschenauseinanderführung, bestehend aus Zuförderer, einer Überleitstrecke und einem Abförderer, wobei die Überleitstrecke aus einer Vielzahl von nebeneinander angeordneten Plattenbändern gebildet ist, deren einzelne Geschwindigkeiten sich gegenüber dem Zuförderer allmählich verlangsamen und auf diese Weise aus einem einteiligen Zufördererstrom einen mehrspurigen Flaschenstrom bilden.

Aus der US 1719897 ist eine weitere Vorrichtung zum Auseinanderführen von einreihig ankommenden Gefäßströmen bekanntgeworden, wobei einzelne Flaschen in einen Kanal geführt werden, der kontinuierlich hin- und hergeschwenkt werden kann und auf diese Weise eine Verteilung der am Ende aus dem Kanal auslaufenden Flaschen bewirkt.

Bei diesen bekannten Vorrichtungen sind umfangreiche Steuereinrichtungen vorgesehen, die unter einem nicht unerheblichen Aufwand überwacht und je nach Anlagenleistung überprüft und eingestellt werden müssen.

Aus der DE-B-1080483, DE-U-1868678 (die eine Vorrichtung gemäß dem Oberbegriff des Anspruchs 1 offenbart) und der FR-A-1256178 sind Fördervorrichtungen zum Zweiteilen eines Flaschenstomes u. dgl. bekanntgeworden. Diese bestehen aus einer einseitigen Zuförderstrecke und einer zweireihigen Abförderstrecke mit seitlich angeordneten Förderschnecken, mit denen die Flaschen unter einem sich stetig erweiternden Abstand winkelförmig von den Schneckengängen auseinander gedrückt werden. Hierbei reiben die Wandungen der Schnecken an der Umfangsfläche der Flaschen, was insbesondere bei etikettierten Flaschen von Nachteil ist. Darüber hinaus erfordern die Förderschnecken einen zusätzlichen Antrieb, der ständig auf die Förderleistung der Gesamtanlage eingestellt werden muß.

Der Erfindung liegt die Aufgabe zugrunde, eine Vorrichtung zum Auseinanderführen eines einreihig ankommenden Gefäßstromes zu schaffen, bei welcher auf besondere Steuereinrichtungen und dergleichen und komplizierte Steuerungsgeräte auch in Bezug auf eine Gesamtregelung verzichtet werden kann.

Diese Aufgabe wird gemäß der Erfindung einer Vorrichtung der eingangs genannten Art durch die kennzeichnenden Merkmale des Anspruchs 1 gelöst.

Dabei hat es sich als zweckmäßig erwiesen, daß die Überleitstrecke einen Förderer aufweist, der die Gefäße schlangenlinienförmig zwangsgeführt übernimmt und an den Abförderer übergibt.

In weiterer Ausbildung wird vorgeschlagen, daß der Förderer als im wesentlichen geradliniger Förderer ausgebildet ist, dessen zu den Gefäßwandungen weisender Teil mit schlangenlinigförmig ausgeführter Oberfläche ausgebildet ist und bei seiner Förderbewegung die jeweils anliegenden Gefäße in dieser Position geradlinig führt und zueinander auf unterschiedlichen seitlichen Abständen entläßt. Ferner wird vorgeschlagen, daß der Förderer 4 ein umlaufender Bandförderer ist, auf dem wellenförmig angeordnete abstandsbildende Flächen angeordnet sind, die jeweils in der Anfangsphase eine Verschiebung der Gefäße 8 quer zur Förderrichtung einleiten und diese dann durch entsprechende Gegenflächen gegenstützen und die Gefäße 8 dann in dieser neuen Formation weiterleiten, wobei die jeweils einen Kanal bildenden Flächen elastisch ausgebildet sind.

Weitere Merkmale ergeben sich aus den Unteransprüchen.

Mit der vorgeschlagenen Ausgestaltung werden die einspurig zulaufenden Gefäße zwangsgesteuert auf unterschiedliche Positionen zueinander verbracht und durch diesen seitlichen Versatz so aufgelockert, daß eine mehrspurige Ableitung zwangsweise erfolgt. Insbesondere werden die Flaschen bis zur Übergabe auf den Mehrspurförderer von den Bauteilen der umlaufenden Förderervorrichtung abgestützt bzw. unterstützt und werden nicht, wie bei bekannten Einrichtungen, plötzlich ohne jegliche Unterstützung auf den Weiterförderer abgegeben. Durch die schlangenlinienförmige Ausbildung der Förderspur werden die Flaschen im jeweiligen Einlaufbereich nach einer kurzen Einfädelungsstrecke auf die bestimmte versetzte Position verbracht und dann geradlinig weitergefördert und anschließend auf den Mehrspurförderer abgegeben. Es findet also keine zusätzliche seitliche Beschleunigung der Flaschen statt, wie es bei den bekannten Einrichtungen häufig nicht zu vermeiden ist. Insbesondere führt eine solche seitliche Beschleunigung entgegen der eigentlichen Hauptförderrichtung insbesondere bei leichtgewichtigen Flaschen zu Pendelbewegungen und Umfallern, wodurch der eigentliche Anlagenbetrieb mitunter erheblich gestört wird. Diese Nachteile werden durch die vorliegende Erfindung ausgeschaltet, weil die Gefäße, nachdem sie durch die oberhalb der Überleitstrecke angreifenden Förderer seitlich versetzt zueinander ausgerichtet sind, parallel zu ihrer ursprünglichen Fortbewegungslinie transportiert werden.

Im nachfolgenden wird die Erfindung anhand eines in der Zeichnung dargestellten Ausführungsbeispiels näher erläutert.

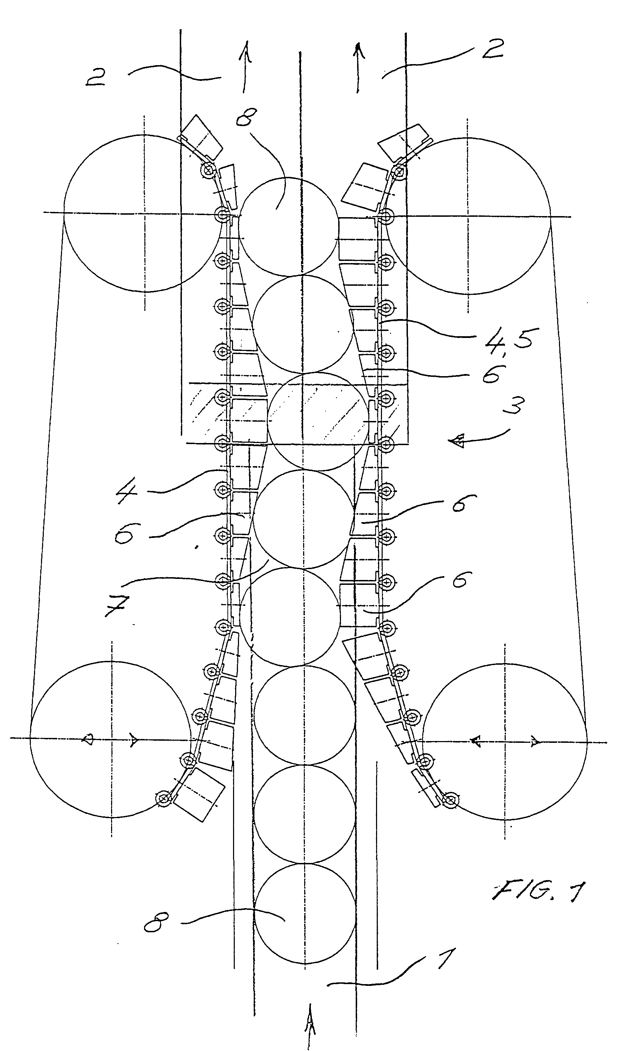

Die Zeichnung zeigt in Figur 1 eine Vorrichtung zum Auseinanderführen eines einreihig ankommenden Gefäßstromes in einen mehrspurigen Gefäßstrom, wobei ein Zuförderer 1 und ein Abförderer 2 als mehrspuriger Förderer vorgesehen ist. Zwischen diesen beiden Förderern 1, 2 ist die eigentliche Überleitstrecke 3 angeordnet. Die Förderer 1, 2 und die Überleitstrecke 3 sind als Band- und/oder Plattenbandförderer ausgebildet. Im Bereich der Überleitstrecke 3 ist seitlich ein Förderer 4 angeordnet, der beispielsweise aus umlaufenden Ketten 5 besteht, an denen eine schlangenlinienförmige Oberfläche 6 angeordnet ist. Diese Oberfläche 6 kann beispielsweise aus Kunststoff, Schaumstoff oder anderen dämpfenden Materialien bestehen, so daß Beschädigungen an den Gefäßwandungen ausgeschlossen sind.

Zweckmäßig bilden zwei sich gegenüberliegende Förderer 4 mit einer entsprechend ausgebildeten Oberfläche 6 einen ständigen schlangenförmigen Kanal 7, in den die Gefäße 8 durch den Staudruck bzw. von dem Zuförderer 1 hineingeführt und dann übernommen werden. Hierbei bleibt die im Eingangsbereich durch die schlangenlinienförmige Kontur vorbestimmte seitliche Position eines Gefäßes 8 während der gesamten Fortbewegung bis hin zum Förderer 2 gleich, so daß keine seitlichen Verschiebungen, auch nicht während der Abgabe an den Mehrspurförderer, stattfindet. Auf diese Weise ist eine besonders problemlose Übergabe der Gefäße nach ihrer Entlassung aus der Zwangsführung möglich. Je nach Staudruck der auf dem Zuführförderer befindlichen Gefäße 8 können diese die Vorrichtung zum Auseinanderführen selbstätig antreiben. Es ist aber auch denkbar, die seitlichen Förderer 4 entsprechend der Bewegungsgeschwindigkeit der Gefäße 8 auf dem Zuförderer 1 bzw. entsprechend der Zuförderergeschwindigkeit anzutreiben, wobei auch die Möglichkeit einer regelungstechnischen Einbeziehung des Antriebes entsprechend der Anlagenleistung möglich ist.

Wie bereits ausgeführt, werden die einlaufenden Gefäße 8 durch den Zuförderer 1 in den Kanal 7 hineinbewegt und durch die jeweils ihnen zugeordneten seitlichen Oberflächen 6 des Förderers 4 in ihrer Zulaufposition seitlich verschoben und dann in dieser Stellung durch die gesamte Überleitstrecke bis hin zum Abförderer geführt. Anstelle des in der Zeichnung dargestellten zweiten Förderers ist denkbar, nur einen Förderer 4 vorzusehen und anstelle des zweiten Förderers entsprechende leicht federnde Leitelemente vorzusehen, die ebenfalls ein Anliegen der Gefäße mindestens an der sie korrigierenden Oberfläche des Förderers sicherstellen. Der Förderer 4 kann für die Verstellung quer zur Förderrichtung auf unterschiedliche Gefäßgrößen angespaßt werden.

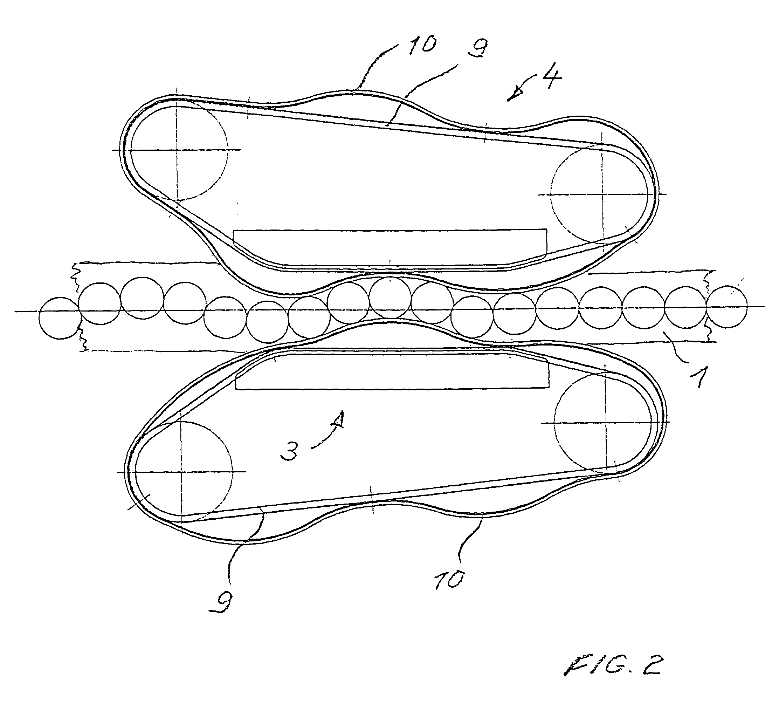

Gemäß Figur 2 besteht der Förderer aus zwei ineinanderliegenden Zahnriemen 9, 10, wobei der äußere Zahnriemen 10 wellenförmig an dem inneren Zahnriemen 9 befestigt ist. Der Größenunterschied des äußeren Zahnriemens ist dabei mindestens so gewählt, daß im jeweiligen Umlenkbereich keine Spannungen durch ein zu sattes Anliegen entstehen können. Der innere Zahnriemen 9 kann dabei breiter ausgebildet sein und ein oder zwei äußere Zahnriemen 10 aufnehmen, wobei deren höhenmäßige Anordnungen so gewählt sind, daß eine optimale Führung der Flaschen 8 auch im Hinblick auf deren Ausstattungen gewährleistet ist. Bei nur einem äußeren Zahnriemen 10 ist dieser zweckmäßig in Bodennähe der Flaschen 8 angebracht, um insbesondere bei leichtgewichtigen Flaschen einen tiefen Angriffspunkt zu sichern.

Anstelle eines Zahnriemens 10 können auch Lederriemen u. dgl. an dem inneren Zahnriemen 9 oder einer Kette u. dgl. wellenförmig angeordnet sein.

Die partielle Befestigung beider Zahnriemen 9, 10 oder der sonstigen äußeren elastischen Mittel kann auf verschiedene Art und Weise beispielsweise durch Kleben, Nieten u. dgl. ausgeführt werden.

## Patentansprüche

1. Vorrichtung zum Auseinanderführen eines einreihig ankommenden aufrechten Gefäßstromes in einen mehrspurigen Gefäßstrom, bestehend aus einem Zuförderer (1), einer Überleitstrecke (3) und einem Abförderer (2), wobei die Förderer als Band- und/oder Plattenbandförderer ausgebildet sind, ***dadurch gekennzeichnet*, *dass*** die Überleitstrecke (3) seitlich mindestens einen Ketten- oder Riemenförderer aufweist, wobei die aufrecht stehend zulaufenden Gefäße (8) durch die Oberflächen (6) des Förderers (4) im Eingangsbereich der Überleitstrecke (3) zwangsgesteuert seitlich versetzt zueinander ausgerichtet und dann in dieser Stellung verbleibend geradlinig durch die Überleitstrecke (3) geführt und anschließend auf einem Mehrspurförderer (versetzt) zueinander entlassen werden.

2. Vorrichtung nach Anspruch 1, ***dadurch gekennzeichnet,* daß** der Förderer (4) die Gefäße (8) schlangenlinienförmig zwangsgeführt übernimmt und an den Abförderer (2) übergibt.

3. Vorrichtung nach Anspruch 1, ***dadurch gekennzeichnet,* daß** der Förderer (4) als im wesentlichen geradliniger Förderer und dessen zu den Gefäßwandungen weisender Teil mit schlangenlinienförmig ausgeführter Oberfläche (6) ausgebildet ist und bei seiner Förderbewegung die jeweils anliegenden Gefäße (8) dieser Position geradlinig führt und zueinander auf unterschiedlichen seitlichen Abständen entläßt.

4. Vorrichtung nach Anspruch 1, ***dadurch gekennzeichnet,* daß** der Förderer (4) ein umlaufender Bandförderer ist, auf dem wellenförmig angeordnete abstandsbildende Flächen angeordnet sind, die jeweils in der Anfangsphase eine Verschiebung der Gefäße (8) quer zur Förderrichtung einleiten und diese dann durch entsprechende Gegenflächen gegenstützen und die Gefäße (8) dann in dieser neuen Formation weiterleiten, wobei die jeweils einen Kanal bildenden Flächen elastisch ausgebildet sind.

5. Vorrichtung nach den vorhergehenden Ansprüchen, ***dadurch gekennzeichnet,* daß** die abstandsbildenden Flächen aus elastischem Leder bestehen, welches wellenförmig auf dem Bandförderer angebracht ist.

6. Vorrichtung nach den vorhergehenden Ansprüchen, ***dadurch gekennzeichnet,* daß** die Überleitstrecke (3) aus sich gegenüberliegenden Förderern (4) besteht, die mit ihren zu den Gefäßen weisenden Flächen (6) einen ständig abwechselnden schlangenlinienförmigen Kanal (7) bilden.

7. Vorrichtung nach den vorhergehenden Ansprüchen, ***dadurch gekennzeichnet,* daß** der Förderer (4) von den sich unter Staudruck bewegenden Gefäßen (8) antreibbar ist.

8. Vorrichtung nach den vorhergehenden Ansprüchen, ***dadurch gekennzeichnet,* daß** der Förderer (4) in Abhängigkeit von der Durchsatzleistung des Zuförderers (1) antreibbar ist.

9. Vorrichtung nach den vorhergehenden Ansprüchen, ***dadurch gekennzeichnet,* daß** der Förderer (4) mittels mechanischer Ankoppelung an den Antrieb des Abförderers (2) oder Zuförderers (1) antreibbar ist.

10. Vorrichtung nach den vorhergehenden Ansprüchen 6 bis 9, ***dadurch gekennzeichnet,* daß** der Abstand der Förderer (4) zueinander auf das Format der Gefäße (8) manuell oder automatisch einstellbar ist.

11. Vorrichtung nach Anspruch 5, ***dadurch gekennzeichnet*, daß** die abstandsbildenden Flächen aus elastischem Kunststoff bestehen.

12. Vorrichtung nach Anspruch 5, ***dadurch gekennzeichnet*, daß** die abstandsbildenden Flächen mit dem Bandförderer an bestimmten Stellen vernietet und/oder verklebt sind.

13. Vorrichtung nach Anspruch 5, ***dadurch* gekennzeichnet, daß** die abstandsbildenden Flächen an bestimmten Stellen mit dem Bandförderer lösbar verbunden sind.

14. Vorrichtung nach den vorhergehenden Ansprüchen, ***dadurch gekennzeichnet,* daß** der Förderer (4) aus zwei ineinanderliegenden Zahnriemen (9, 10) gebildet ist, wobei der äußere Zahnriemen (10) wellenförmig an dem inneren Zahnriemen (9) angeordnet ist.

15. Vorrichtung nach Anspruch 14, ***dadurch gekennzeichnet,* daß** der innere Zahnriemen (9) breiter als der äußere Zahnriemen (10) ist.

## Claims

1. Apparatus for separating a vertically extending stream of vessels, which arrives in one row, into a multi-track stream of vessels, said apparatus comprising a supply conveyor (1), a transfer path (3) and a discharge conveyor (2), the conveyors being in the form of band and/or platform conveyors, **characterised in that** the transfer path (3) is provided laterally with at least one chain conveyor or belt conveyor, the vertically extending, incoming vessels (8) being orientated so as to be laterally offset from one another in a forcibly controlled manner through the surfaces (6) of the conveyor (4) in the inlet region of the transfer path (3) and then being guided in a straight line through the transfer path (3) so as to remain in this position, and subsequently being released, offset from one another, on a multi-track conveyor.

2. Apparatus according to claim 1, **characterised in that** the conveyor (4) takes-over the vessels (8) in a forcibly guided, undulatory manner and transfers them to the discharge conveyor (2).

3. Apparatus according to claim 1, **characterised in that** the conveyor (4) is in the form of a substantially rectilinear conveyor, and the part of said conveyor pointing towards the vessel walls is provided with an undulatory surface (6) and, during its conveying movement, it guides the respective abutting vessels (8) in this position in a rectilinear manner and releases said vessels at different lateral spacings from one another.

4. Apparatus according to claim 1, **characterised in that** the conveyor (4) is a circumferential band conveyor, on which are disposed undulatory, spacing-forming faces, which respectively initiate a displacement of the vessels (8) transversely relative to the direction of conveyance in the initial phase and then counter-support said vessels by means of corresponding counter-faces and then advance the vessels (8) in this new formation, the faces which form a respective channel being resilient.

5. Apparatus according to the preceding claims, **characterised in that** the spacing-forming faces are formed from resilient leather which is attached to the band conveyor in an undulatory manner.

6. Apparatus according to the preceding claims, **characterised in that** the transfer path (3) comprises oppositely situated conveyors (4) which, with their faces (6) pointing towards the vessels, form a constantly changing undulatory channel (7).

7. Apparatus according to the preceding claims, **characterised in that** the conveyor (4) for the vessels (8), which move under dynamic pressure, is drivable.

8. Apparatus according to the preceding claims, **characterised in that** the conveyor (4) is drivable in dependence on the throughput capacity of the supply conveyor (1).

9. Apparatus according to the preceding claims, **characterised in that** the conveyor (4) is drivable by means of a mechanical coupling with the drive of the discharge conveyor (2) or supply conveyor (1).

10. Apparatus according to the preceding claims 6 to 9, **characterised in that** the spacing between the conveyors (4) can be set manually or automatically to the size of the vessels (8).

11. Apparatus according to claim 5, **characterised in that** the spacing-forming faces are formed from resilient plastics material.

12. Apparatus according to claim 5, **characterised in that** the spacing-forming faces are riveted and/or adhered to the band conveyor at predetermined locations.

13. Apparatus according to claim 5, **characterised in that** the spacing-forming faces are detachably connected to the band conveyor at predetermined locations.

14. Apparatus according to the preceding claims, **characterised in that** the conveyor (4) is formed from two toothed belts (9, 10), which lie one inside the other, the outer toothed belt (10) being disposed in an undulatory manner on the inner toothed belt (9).

15. Apparatus according to claim 14, **characterised in that** the inner toothed belt (9) is wider than the outer toothed belt (10).

## Revendications

1. Dispositif pour séparer un flux de récipients debout provenant en une rangée en un flux de récipients à plusieurs voies, constitué d'un convoyeur d'amenée (1), d'un parcours de transfert (3) et d'un convoyeur d'évacuation (2), les convoyeurs étant conformés en convoyeurs à courroie et/ou en convoyeurs à courroie et à plaques, **caractérisé en ce que** le parcours de transfert (3) comporte latéralement au moins un convoyeur à chaîne ou à courroie, les récipients (8) arrivant debout étant orientés, par les surfaces (6) du convoyeur (4), de manière commandée forcée, pour être décalés latéralement les uns par rapport aux autres, puis étant guidés dans cette position, en restant en ligne droite, à travers le parcours de transfert (3), et étant ensuite relâchés sur un convoyeur à plusleurs voies, décalés les uns par rapport aux autres.

2. Dispositif selon la revendication 1, **caractérisé en ce que** le convoyeur (4) reprend les récipients (8) en les guidant de manière forcée selon un trajet en forme de ligne sinueuse et les transfère au convoyeur d'évacuation (2).

3. Dispositif selon la revendication 1, **caractérisé en ce que** le convoyeur (4) est conformé en convoyeur sensiblement rectiligne et sa partie tournée vers les parois des récipients présente une surface (6) en forme de ligne sinueuse, et, pendant son mouvement de transport, guide les récipients (8) qui s'y appliquent en ligne droite dans celle position, et les relâche à différentes distances latérales les uns des autres.

4. Dispositif selon la revendication 1, **caractérisé en ce que** le convoyeur (4) est un convoyeur sans fin à courroie, sur lequel sont disposées des surfaces disposées ondulées et provoquant un écartement, qui, pendant la phase initiale, provoquent chacune un déplacement des récipients (8) perpendiculairement à la direction de transport et les soutiennent ensuite par des contre-surfaces correspondantes et transfèrent ensuite les récipients (8) dans cette nouvelle formation, les surfaces, qui forment chacune un canal, étant réalisées de façon élastique.

5. Dispositif selon les revendications précédentes, **caractérisé en ce que** les surfaces provoquant un écartement sont en cuir élastique qui est mis en place avec une configuration ondulée sur le convoyeur à courroie.

6. Dispositif selon les revendications précédentes, **caractérisé en ce que** le parcours de transfert (3) est constitué de convoyeurs (4) se faisant face qui, par leurs surfaces (6) tournées vers les récipients, forment un canal (7) en forme de ligne sinueuse changeant continuellement.

7. Dispositif selon les revendications précédentes, **caractérisé en ce que** le convoyeur (4) peut être entraîné par les récipients (8) se déplaçant sous pression dynamique.

8. Disposltif selon les revendications précédentes, **caractérisé en que** le convoyeur (4) peut être entraîné en fonction du débit du convoyeur d'amenée (1).

9. Dispositif selon les revendications précédentes, **caractérisé en ce que** le convoyeur (4) peut être entraîné par accouplement mécanique au dispositif d'entraînement du convoyeur d'évacuation (2) ou du convoyeur d'amenée (1).

10. Dispositif selon les revendications précédentes 6 à 9, **caractérisé en ce que** la distance des convoyeurs (4) l'un par rapport à l'autre est réglable manuellement ou automatiquement selon le format des récipients (8).

11. Dispositif selon la revendication 5, **caractérisé en ce que** les surface provoquant un écartement sont en matière synthétique élastique.

12. Dispositif selon la revendication 5, **caractérisé en ce que** les surfaces provoquant un écartement sont rivées et/ou collées avec le convoyeur à courroie en des emplacements déterminés.

13. Dispositif selon la revendication 5, **caractérise en ce que** les surfaces provoquant un écartement sont reliées de manière séparable au convoyeur à courroie, en des emplacements déterminés.

14. Dispositif selon les revendications précédentes, **caractérisé en ce que** le convoyeur (4) est formé de deux courroies crantées (9, 10) situées l'une dans l'autre, la courroie crantée extérieure (10) étant disposée selon une configuration ondulée sur la courroie crantée intèrieure (9).

15. Dispositif selon la revendication 14, **caractérisé en ce que** la courroie crantée intérieure (9) est plus large que la courroie crantée extérieure (10).
